# EUROPÄISCHE PATENTSCHRIFT

(11) **EP 1 790 175 B1**
(45) Veröffentlichungstag und Bekanntmachung des Hinweises auf die Patenterteilung: **25.08.2010**
(21) Anmeldenummer: 05790297.5
(22) Anmeldetag: 01.09.2005
(51) Int. Cl.: H04Q 3/00, H04M 7/00, H04M 3/42, H04M 3/428

(54) **VERFAHREN ZUM HERSTELLEN EINER TELEKOMMUNIKATIONSVERBINDUNG AN EINEM GERUFENEN TEILNEHMERANSCHLUSS EINES TELEKOMMUNIKATIONSNETZES**
METHOD FOR ESTABLISHING A NETWORK-SPECIFIC TELECOMMUNICATION CONNECTION ON A CALLED USER ACCESS OF A TELECOMMUNICATION NETWORK
PROCEDE POUR ETABLIR UNE LIAISON DE TELECOMMUNICATION SPECIFIQUE DU RESEAU, AVEC UN RACCORDEMENT UTILISATEUR APPELE, D'UN RESEAU DE TELECOMMUNICATION

(30) Priorität: 03.09.2004 DE 102004043214
(43) Veröffentlichungstag der Anmeldung: 30.05.2007
(73) Patentinhaber: Teles AG Informationstechnologien, 10587 Berlin (DE)
(72) Erfinder: SCHINDLER, Sigram, 14129 Berlin (DE); BASTIAN, Jan, 13437 Berlin (DE); WEGENER, Rochus, 13403 Berlin (DE); LÜDTKE, Karsten, 12167 Berlin (DE); PAETSCH, Frank, 12357 Berlin (DE)
(74) Vertreter: Müller, Wolfram Hubertus
(86) Internationale Anmeldenummer: PCT/DE2005/001556
(87) Internationale Veröffentlichungsnummer: WO 2006/024293

(56) Entgegenhaltungen:
- EP-A- 0 658 063
- EP-A- 0 912 071
- DE-A1- 19 943 742

## Beschreibung

Die Erfindung betrifft ein Verfahren zum Herstellen einer Telekommunikations (TK)-Verbindung an einem gerufenen Teilnehmeranschluss eines ersten Telekommunikationsnetzes, an den mindestens ein Endsystem angeschlossen ist, wobei der Teilnehmeranschluss eine durch den Betreiber des ersten Telekommunikationsnetzes zugeordnete Rufnummer besitzt.

### Hintergrund der Erfindung

Die DE 199 43 742 A1 beschreibt ein Verfahren zum zur Verfügung stellen zusätzlicher TK-Dienste an einem gerufenen Teilnehmeranschluss, das in einer Ausgestaltung vorsieht, dass an einen solchen gerufenen Teilnehmeranschluss gerichtete Verbindungsaufbauwünsche über ein von dem gerufenen Teilnehmer preselektiertes TK-Netz geführt werden. Durch die Kommunikation dieses preselektierten intermediären TK-Netzes mit einem am Teilnehmeranschluss angeordneten intelligenten Service-Agenten können zusätzliche Dienste bereitgestellt werden.

Das aus der DE 199 43 742 A1 bekannte Verfahren geht von der Voraussetzung aus, dass bereits eine erste Verbindung zwischen dem preselektierten intermediären TK-Netz und dem Teilnehmeranschluss vorliegt und während dieser Verbindung ein weiterer Verbindungswunsch eingeht. Die erste Verbindung kann dabei auch eine Einwahl des Teilnehmeranschlusses in das Internet über eine zwischen dem Teilnehmeranschluss und einem Switch des preselektierten TK-Netzes durchgeschaltete Verbindung umfassen. Die erste Verbindung geht in diesem Fall allerdings von dem Teilnehmeranschluss als rufendem Anschluss aus. Sofern die DE 199 43 742 A1 eine Datenübertragung an den gerufenen Teilnehmeranschluss über Voice over IP (VoIP) Technik vorsieht, wird die VoIP Technik allein in dem Leitungsvermittlungsnetz zwischen dem Switch des preselektierten TK-Netzes und dem gerufenen Teilnehmeranschluss realisiert.

Die EP 0 912 071 A2 beschreibt ein System und ein Verfahren zur Bereitstellung eines entbündelten Zugangs zu Telekommunikations-Anschlussleitungen. Dabei wird die Möglichkeit bereitgestellt, TK-Endgeräte an einen ausgewählten Zugangsnetzbetreiber ("Local Exchange Carrier") anzuschließen. Die EP 0 912 071 A2 unterscheidet dabei zwischen dem vorgegebenen Zugangsnetzbetreiber ("Incumbent Local Exchange Carrier") und mit diesem in Wettbewerb stehenden alternativen Zugangsnetzbetreibern ("Competing Local Exchange Carrier").

Dabei sind TK-Endgeräte über eine Anschlusseinheit mit einem Line Interface Modul verbunden. Das Line Interface Modul hat zwei Ausgänge, einen Ausgang zur Ortsvermittlungsstelle des vorgegebenen Zugangsnetzbetreibers und einen Ausgang zu einem Netzwerk Interface Modul. Das Netzwerk Interface Modul ist über ein generisches Verbindungsnetzwerk, das eine Mehrzahl miteinander verbundener Switches und Übertragungseinrichtungen aufweist, mit einem Serviceknoten eines alternativen Zugangsnetzbetreiber verbunden. Auf diese Weise ist es möglich, dass ein TK-Endgerät statt an die Ortsvermittlungsstelle des vorgegebenen Zugangsnetzbetreibers über das Verbindungsnetzwerk an die Ortsvermittlungsstelle eines alternativen Zugangsnetzbetreiber angeschlossen ist.

Das Akronym "xDSL" (DSL = digital subscriber line = digitale Teilnehmeranschlussleitung) bezeichnet in diesem Dokument alle Übertragungstechniken für digitale Daten - sowohl über Telefonleitungen aus Zweidraht-Kupferkabeln als auch über andere physikalische Medien (etwa TV-Kabel, DVB-T-Strecken oder weitere terrestrische oder satellitengestützte Funkstrecken) - zur Datenübertragung zwischen dem Computer eines Benutzers eines TK-Netzes und diesem TK-Netz (bevorzugt das Internet), mit Ausnahme der ISDN-Technik und der marktüblichen Analogmodem-Technik (etwa gemäß der V-Serie von ITU-Empfehlungen) für Telefonleitungen aus Zweidraht-Kupferkabeln.

Die gebräuchlichste Form von xDSL-Technik ist die aDSL-Technik (asymmetric digital subscriber line) auf dem physikalischem Medium "kupferne Telefon-Doppelader": Sie ist asymmetrisch in dem Sinne, dass sie für diese Datenübertragung einen schnellen Empfangs- und einen langsameren Sendekanal vorsieht. Eine andere gebräuchliche Form Telefondraht-gebundener xDSL-Technik ist die sDSL-Technik (symmetric digital subscriber line): Hier liegt eine symmetrische, gleichermaßen schnelle Auslegung von Empfangs- und Sendekanal vor. Mit Telefondraht-xDSL-Techniken sind vorzugsweise Übertragungsraten im Megabit/s-Bereich möglich. Z.B. liegt die an einem aDSL-Anschluss für den Datenempfang des Endsystems vorgesehene Bandbreite in der Regel bei rund 0,8 Mbit/s bis 3 Mbit/s.

### Aufgabe der Erfindung

Der vorliegenden Erfindung liegt die Aufgabe zu Grunde, ein Verfahren zum Herstellen einer TK-Verbindung an einem gerufenen Teilnehmeranschluss eines TK-Netzes bereitzustellen, das es diesem Teilnehmeranschluss ermöglicht, eingehende Verbindungswünsche möglichst flexibel und kostengünstig über ein intermediäres TK-Netz zu führen - ebenso wie es einem Teilnehmeranschluss bei von ihm abgehenden Verbindungswünschen möglich ist, diese über ein intermediäres TK-Netz zu führen.

### Zusammenfassung der Erfindung

Diese Aufgabe wird erfindungsgemäß durch ein Verfahren mit den Merkmalen des Anspruchs 1 gelöst. Bevorzugte und vorteilhafte Ausgestaltungen der Erfindung sind in den Unteransprüchen angegeben.

Danach ist vorgesehen, dass sämtliche TK-Verbindungsaufbauwünsche, die unter Verwendung der Rufnummer des gerufenen Teilnehmeranschlusses an den Teilnehmeranschluss gerichtet werden, zunächst an ein preselektiertes TK-Netz geroutet werden. Die gewünschte TK-Verbindung zu dem gerufenenen Teilnehmeranschluss wird dann über das preselektierte TK-Netz komplettiert, wobei das Komplettieren der TK-Verbindung ein Routen des TK-Verbindungsaufbauwunsches von dem preselektierten TK-Netz an einen ersten Zugangspunkt eines Paketvermittlungsnetzes, ein Routen des TK-Verbindungsaufbauwunsches über das Paketvermittlungsnetz an einen zweiten Zugangspunkt des Paketvermittlungsnetzes und von dem zweiten Zugangspunkt an den gerufenen Teilnehmeranschluss umfasst. Es wird also die Verbindung zum gerufenen Teilnehmeranschluss zumindest über das preselektierte TK-Netz und ein Paketvermittlungsnetz hergestellt.

Dabei sind das erste TK-Netz und das preselektierte zweite TK-Netz über Interconnectpunkte zusammengeschaltet, die einen Netzübergang zwischen dem ersten TK-Netz und dem zweiten TK-Netz verwirklichen.

Die erfindungsgemäße Lösung beruht auf dem Gedanken, einen TK-Verbindungsaufbauwunsch an einen gerufenen Teilnehmeranschluss über ein preselektiertes TK-Netz zu routen und beim Komplettieren der TK-Verbindung ein Paketvermittlungsnetz zu involvieren. Da der gerufene Teilnehmeranschluss bzw. dessen Nutzer eine Preselektion hinsichtlich des Netzes vornimmt, über das eine TK-Verbindung zum gerufenen Teilnehmeranschluss komplettiert wird, wird dieses Verfahren auch als "Reverse Preselektion" bezeichnet.

Das Komplettieren einer TK-Verbindung unter Involvierung eines Paketvermittlungsnetzes sowie eine Datenübertragung über das Paketvermittlungsnetz nach Komplettieren der TK-Verbindung ermöglichen eine besonders kostengünstige Realisierung der TK-Verbindung zum gerufenen Teilnehmeranschluss. Dabei ist bevorzugt vorgesehen, dass im preselektierten TK-Netz zu einem möglichst frühen Zeitpunkt, d.h. sobald der TK-Verbindungsaufbauwunsch an das preselektierte zweite TK-Netz geleitet wurde, der TK-Verbindungsaufbauwunsch an das Paketvermittlungsnetz weitergeleitet wird. Dies ermöglicht eine kostengünstige Datenübertragung über das Paketvermittlungsnetz unter Minimierung der Involvierung erforderlicher PSDN/ISDN-Telekommunikationsnetze und deren Infrastruktur.

In einer bevorzugten Ausgestaltung der Erfindung umfasst der Teilnehmeranschluss einen xDSL-Teilnehmeranschluss. Das Komplettieren der gewünschten TK-Verbindung über das preselektierte TK-Netz zu dem xDSL-Teilnehmeranschluss umfasst dann ein Routen des TK-Verbindungsaufbauwunsches im Paketvermittlungsnetz an einen xDSL-Zugangspunkt zum Paketvermittlungsnetz und von diesem über xDSL-Technik an den xDSL-Anschluss. Der gerufene Teilnehmeranschluss ist somit über xDSL-Technik direkt mit dem Internet verbunden. Das Komplettieren des TK-Verbindungsaufbauwunsches kann allein über das Paketvermittlungsnetz und xDSL-Technik erfolgen, ohne dass die Involvierung herkömmlicher PSDN/ISDN-Telekommunikationsinfrastruktur zum Komplettieren der TK-Verbindung erforderlich wäre.

Alternativ kann jedoch auch vorgesehen sein, dass der TK-Verbindungsaufbauwunsch vom Paketvermittlungsnetz wieder zurück an das erste TK-Netz geleitet und über eine Ortsvermittlungsstelle des ersten TK-Netzes terminiert wird. Diese Variante betrifft den Fall, dass eine Verbindung zwischen einem Teilnehmeranschluss und dem Paketvermittlungsnetz über die lokale Ortsvermittlungsstelle und einen PSDN/ISDN-Zugangspunkt zum Paketvermittlungsnetz hergestellt wird. Dabei kann sowohl vorgesehen sein, dass der TK-Verbindungsaufbauwunsch vom Paketvermittlungsnetz direkt - ohne Zwischenschaltung anderer TK-Netze - an das erste TK-Netz geleitet wird, als auch dass eine indirekte Weiterleitung des Verbindungsaufbauwunsches an das erste TK-Netz erfolgt, also unter Zwischenschaltung mindestens eines weiteren intermediären TK-Netzes.

Sofern die an den gerufenen Teilnehmeranschluss zu übertragenen Daten an dem ersten Zugangspunkt des Paketvermittlungsnetzes noch nicht als paketierte Daten vorliegen, werden sie an diesem Zugangspunkt paketiert. Bevorzugt erfolgt dabei eine Paketierung als IP-Datenpakete. Bei dem Paketvermittlungsnetz handelt es sich bevorzugt, jedoch nicht notwendigerweise, um das Internet.

In einer bevorzugten Ausgestaltung der Erfindung betreffen die an den gerufenen Teilnehmeranschluss gerichteten TK-Verbindungsaufbauwünsche eine Sprachverbindung zu dem gerufenen Teilnehmeranschluss. Für diesen Fall werden die an den Teilnehmeranschluss zu übertragenden Daten per Internet-Telephonie über das Paketvermittlungsnetz übertragen. Hierzu kann auf die an sich bekannten Protokolle H.323 und SIP zurückgegriffen werden. "H.323" ist ein ITU Standard für Voice over IP. "SIP" (Session Initiation Protokoll) ist ein von der IETF (Internet Engineering Task Force) herausgegebenes Protokoll zum Aufbau von Kommunikationsverbindungen auf der Basis von Datennetzen. Die Erfindung zeichnet sich in dieser Ausgestaltung durch den Gedanken aus, zur kostengünstigen Herstellung einer TK-Verbindung die Signalisierungs- und Nutzinformationen einer herzustellenden bzw. einer hergestellten TK-Verbindung zunächst über ein preselektiertes TK-Netz und von diesem (unter Entstehung möglichst geringer Kosten innerhalb des preselektiertes TK-Netzes) an das Paketvermittlungsnetz zur kostengünstigen Internet-Telephonie zu leiten.

Es ist in einer Ausgestaltung vorgesehen, dass an den Teilnehmeranschluss ein Personal Computer (PC) angeschlossen ist und zu dem TK-Verbindungsaufbauwunsch gehörende Daten an dem PC akustisch und/oder optisch dargestellt werden. Beispielsweise wird eine Pop-up-Nachricht auf dem Computerbildschirm erzeugt, dass ein Telefongespräch aufgebaut oder ein Telefax übersandt werden soll. Der Computer ist für diesen Fall bevorzugt mit einer Soundkarte und einem Telephoniesoftware-System versehen.

Eine weitere bevorzugte Ausgestaltung betrifft die Herstellung einer TK-Verbindung zur IP-Telephonie an einen xDSL-Teilnehmeranschluss. Hier ist bevorzugt vorgesehen, dass über den xDSL-Anschluss empfangene Daten vor oder nach ihrem Empfang am xDSL-Anschluss eine VOIP-Vorrichtung durchlaufen, die die paketierten Daten in ein Signal umwandeln, das durch einen am xDSL-Anschluss angeschlossenen analogen oder digitalen Telefonapparat wiedergebbar ist. Durch eine solche VOIP-Vorrichtung ist es möglich, dass unter Verwendung von IP-Telephonie eine Verbindung zu einem herkömmlichen Telefonapparat hergestellt wird.

Dabei gibt es mehrere Strukturvarianten, an welcher Stelle zwischen dem Paketvermittlungsnetz und dem Telefonapparat eine solche VOIP-Vorrichtung angeordnet sein kann. Diese unterschiedlichen Strukturvarianten sind an sich bekannt, so dass sie hier nur kurz erläutert werden. In einer ersten Strukturvariante befindet sich die VOIP-Vorrichtung an oder im Zugangspunkt zum Paketvermittlungsnetz. Die derart platzierten VOIP-Vorrichtungen werden üblicherweise VOIP-Server genannt. In einer zweiten Strukturvariante befindet sich die VOIP-Vorrichtung zwischen dem Zugangspunkt zum Paketvermittlungsnetz und einer TK-Anlage/Router, an der das Telefon angeschlossen ist. Derart platzierte VOIP-Vorrichtungen heißen in der Regel VOIP-Gateways. In einer dritten Stukturvariante ist die VOIP-Vorrichtung direkt dem Endsystem zugeordnet und befindet sich üblicherweise zwischen einerseits dem Telefonapparat oder dem PC sowie andererseits der TK-Anlage (sofern vorhanden) bzw. dem Netzabschluss. Derartige VOIP-Einrichtungen werden VOITAs (Voice over Internet Terminal Adapter) genannt.

Diese drei Strukturvarianten sind sowohl relevant für Ausgestaltungen, bei denen der Zugangspunkt zum Paketvermittlungsnetz ein xDSL-Zugangspunkt ist (xDSL-Teilnehmeranschluss), als auch für Ausgestaltungen, bei denen der Zugangspunkt zum Paketvermittlungsnetz ein PSDN/ISDN-Zugangspunkt ist. Im zweiten Fall ist der Teilnehmeranschluss über das PSDN/ISDN-TK-Netz und die lokale Ortsvermittlungsstelle mit dem Paketvermittlungsnetz verbunden.

Ein Preselektieren des zweiten TK-Netzes erfolgt beispielsweise dadurch, dass die Zuordnung des Teilnehmeranschlusses zu dem preselektierten TK-Netz in eine Datenbank eingetragen wird und das erste TK-Netz anhand der Datenbank überprüft, ob ein eingehender TK-Verbindungswunsch an das zweite TK-Netz geroutet werden soll oder nicht. Die Datenbank wird beispielsweise durch ein Netzmanagement verwaltet.

Das erfindungsgemäße Vefahren betrifft auch Ausführungsvarianten, bei denen über das preselektierte TK-Netz bereits eine TK-Verbindung zu dem gerufenen Teilnehmeranschluss besteht und ein zusätzlich eingehender TK-Verbindungsaufbauwunsch dann über das preselektierte TK-Netz und das Paketvermittlungsnetz an den gerufenen Teilnehmeranschluss geroutet wird. Die bereits bestehende Verbindung kann dabei zum einen über die Ortsvermittlungsstelle des TK-Netzes und zum anderen ebenfalls über das Paketvermittlungsnetz komplettiert sein. Sofern die bereits bestehende TK-Verbindung über das Paketvermittlungsnetz und xDSL-Technik terminiert wurde, werden die Daten der zusätzlichen TK-Verbindung bevorzugt mit den Daten der bereits bestehenden Verbindung auf der xDSL-Übertragungsstrecke gemultiplext.

In einer speziellen Ausgestaltung des erfindungsgemäßen Verfahrens wird erst dann ein eingehender TK-Vermittlungsaufbauwunsch über das preselektierte TK-Netz und das Paketvermittlungsnetz an den gerufenen Teilnehmeranschluss geroutet, nachdem mindestens eine bereits bestehende TK-Verbindung zu dem betrachteten Teilnehmeranschluss über das erste TK-Netz direkt terminiert wurde. Es sind also auch durchaus Szenarien möglich, bei denen eine erste, zweite ... n-te TK-Verbindung direkt über das erste TK-Netz terminiert wurden und erst die n+1-te TK-Verbindung dann in erfindungsgemäßer Weise geroutet wird. Dabei kann beispielsweise vorgesehen sein, bei an bestimmte Endgeräte des Teilnehmeranschlusses gerichteten Verbindungen eine direkte Terminierung über das erste TK-Netz vorzusehen und bei TK-Verbindungen an andere an dem Teilnehmeranschluss angeschlossene Endgeräte eine Terminierung gemäß dem erfindungsgemäßen Verfahren vorzusehen.

Es ist des Weiteren bevorzugt vorgesehen, dass für den Fall, dass ein Routen eines TK-Verbindungsaufbauwunsches vom ersten TK-Netz an das zweite TK-Netz aus technischen Gründen ausnahmsweise nicht möglich ist, der TK-Verbindungsaufbauwunsch dann direkt über das erste TK-Netz komplettiert wird. Es handelt sich hierbei um eine Rückfallposition im Falle des Auftretens technischer Probleme beim Weiterleiten des Verbindungsaufbauwunsches an das zweite TK-Netz, so dass sichergestellt ist, dass ein Verbindungsaufbauwunsch stets an den gerufenen Teilnehmeranschluss komplettiert werden kann.

### Beschreibung mehrerer bevorzugter Ausführungsbeispiele

Die Erfindung wird nachfolgend unter Bezugnahme auf die Figuren anhand mehrerer Ausführungsbeispiels näher erläutert. Es zeigen:
- Figur 1: ein erstes Ausführungsbeispiel einer Telekommunikationsanordnung, mit der das erfindungsgemäße Verfahren realisierbar ist; und
- Figur 2: ein zweites Ausführungsbeispiel einer Telekommunikationsanordnung, mit der das erfindungsgemäße Verfahren realisierbar ist.

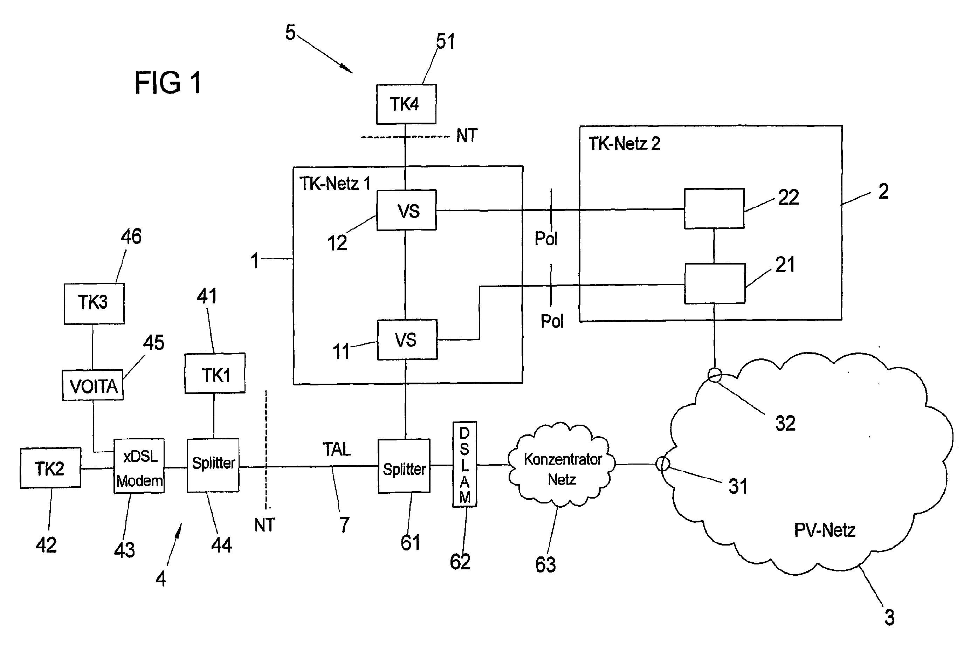

Die Figur 1 zeigt eine TK-Anordnung mit einem ersten TK-Netz 1, einem zweiten TK-Netz 2, einem paketvermittelten TK-Netz 3, einem xDSL-Teilnehmeranschluss 4, einem weiteren Teilnehmeranschluss 5 sowie einem Splitter 61, einem DSLAM 62 und einem Konzentratornetz 63 zur Realisierung einer Datenübertragung zum xDSL-Anschluss 4 mittels xDSL-Technik.

Bei dem TK-Netz 1 handelt es sich um ein leitungsvermitteltes PSTN/ISDN-Telekommunikationsnetz, beispielsweise das Telekommunikationsnetz des ehemaligen Monopolisten, der Deutschen Telekom AG. POTS steht dabei für "Plain Old Telephonie System", das herkömmliche und teilweise analoge Telefonnetz. ISDN steht für "Integrated Services Digital Network", das durchgängig digitale Netz.

Das TK-netz 1 enthält eine Vielzahl von Vermittlungsstellen bzw. Switches 11, 12, zwischen denen leitungsvermittelt Telekommunikationsdaten übertragen werden. Diese Switches 11, 12 werden hier nur soweit ausgewiesen, als es sich um lokale Ortsvermittlungsstellen handelt, die den Endzugang zu einem Teilnehmeranschluss über eine Teilnehmeranschlussleitung (TAL) bereitstellen. Die Figur 1 zeigt beispielhaft zwei solcher Ortsvermittlungsstellen 11, 12 des TK-Netzes 1.

Das weitere TK-Netz 2 ist ebenfalls ein POTS/ISDN-Leitungsvermittlungsnetz, das jedoch einem anderen Netzbetreiber gehört. Auch das TK-Netz 2 weist mehrere solcher Vermittlungsstellen bzw. Switches 21, 22 auf, von denen lediglich zwei dargestellt sind. Die Switches 21, 22 leiten ebenso wie die Switche 11, 12 die eingehenden oder ausgehenden Verbindungen weiter und schalten sie durch.

Das erste TK-Netz 1 und das zweite TK-Netz 2 sind über Interconnectpunkte POIs (Points of Interconnect) zusammengeschaltet. Eine Interconnection zwischen den Kommunikationsnetzen 1, 2 wird beispielsweise durch an sich bekannte Interconnectanschlüsse zur Verfügung gestellt, die 2 Mbit/s-Leitungen (E1 Gruppen) der Netze zusammenschalten und einen Netzübergang verwirklichen.

Das Paketvermittlungsnetz 3 kann grundsätzlich ein beliebiges Paketvermittlungsnetz sein. Bevorzugt handelt es sich um das Internet. Im Internet befinden sich eine Vielzahl von in der Figur nicht näher dargestellten Routern, die gemäß dem Internet-Protokoll paketierte Daten (IP-Datenpakete) zwischenspeichern und weiterleiten. Über Zugangspunkte 31, 32 erfolgt ein Zugang zu dem Paketvermittlungsnetz.

Der Teilnehmeranschluss 4 ist als xDSL Anschluss ausgebildet. Der xDSL Anschluss 4 umfasst in an sich bekannter Weise einen hochfrequenten Anteil, der einer breitbandigen Datenübertragung dient, sowie einen niederfrequenten Anteil, mit dem klassische POTS/ISDN-Verbindungen realisiert werden. An den Netzabschluss NT einer Teilnehmeranschlussleitung 7 sind im dargestellten Ausführungsbeispiel ein Splitter 44, ein xDSL Modem 43, eine sogenannter VOITA 45 (Voice over Internet Terminal Adapter) sowie drei TK-Endsysteme 41, 42, 46 angeschlossen. Der Splitter 44 sorgt dafür, dass beim Teilnehmeranschluss 4 ankommende/abgehende hochfrequente xDSL-Daten von niederfrequenten Telefonsignalen getrennt werden. Die niederfrequenten Telefonsignale werden dem TK-Endsystem 41 zugeführt, während die hochfrequenten xDSL-Daten über das xDSL Modem 43 dem TK-Endsytem 42 und/oder über den VOITA 45 dem weiteren TK-Endsystem 46 zugeführt werden.

Die Teilnehmeranschlussanleitung (TAL) 7 kann bei der xDSL-Technik als Telefon-Kupferkabel-Adernpaar realisiert sein. Ein in diesem Fall etwa einem Hauptverteiler zugeordneter weiterer Splitter 61 trennt/überlagert wiederum die bei ihm ankommenden/abgehenden xDSL-Daten von den Telefonsignalen. Letztere werden der Vermittlungsstelle 11 des TK-Netzes 1 zugeführt bzw. von dieser ausgesandt.

Die xDSL-Daten werden in dem dargestellten Beispiel einem DSLAM 62 (Digital Subscriber Line Access Multiplexer) zugeführt und von diesem etwa an ein Konzentratornetz 63 geleitet (bzw. bei einem Empfang von Daten von diesem empfangen). Bei dem Konzentratornetz 63 handelt es sich um ein Breitbandnetz, beispielsweise ein ATM-Breitbandnetz. Das Breitbandnetz 63 kann über mehrere xDSL-Zugangspunkte 31, auch als xDSL-Anschlussknoten 31 bezeichnet, mit dem Paketvermittlungsnetz 3 verbunden sein, wobei in der Figur lediglich ein Zugangspunkt 31 dargestellt ist. Auf das Konzentratornetz kann jedoch auch völlig verzichtet werden - die breitbandigen Daten können natürlich auch "direkt" vom DSLAM z.B. dem Internet-Backbone-Netz zugeführt bzw. von diesem entgegengenommen werden.

In der Figur 1 ist des weiteren ein Teilnehmeranschluss 5 dargestellt, der an das TK-Netz 1 und deren Vermittlungsstelle 12 über eine weitere Teilnehmeranschlussleitung in üblicher Weise angeschlossen ist. An dem weiteren Teilnehmeranschluss 5 befindet sich ein viertes TK-Endsystem 51, bei dem es sich beispielsweise um ein herkömmliches analoges Telefon oder ein ISDN-Telefon handelt.

Das erfindungsgemäße Verfahren wird nun beispielhaft an dem Fall erläutert, dass von einem analogen oder digitalen Telefon 51 eine Telefonverbindung zu einem Endsystem 41, 42, 46 des Teilnehmeranschlusses 4 aufgebaut und komplettiert werden soll.

Der einfachste und herkömmliche Fall ist derjenige, dass von dem Telefon 51 über das TK-Netz 1 und die dort vorhandenen Vermittlungsstellen 12, 11 direkt eine Verbindung zu dem TK-Endsystem 41 aufgebaut würde, wobei über die Splitter 61, 44 dafür gesorgt wird, dass am xDSL-Anschluss 4 die niederfrequenten, das Sprachsignal betreffenden Signale zu dem TK-Endsystem 41 geleitet werden. Rufaufbau und Signalisierung erfolgen in an sich bekannter Weise.

Nachteilig an einem solchen Verfahren sind jedoch zum einen möglicherweise relativ hohe Kosten, die der Betreiber des TK-Netzes 1 für die Durchschaltung und/oder Terminierung der Verbindung berechnet, und zum anderen die reduzierten Möglichkeiten, den Endnutzern der Endsysteme 51, 41, 42, 46 zusätzliche Dienste bereitzustellen.

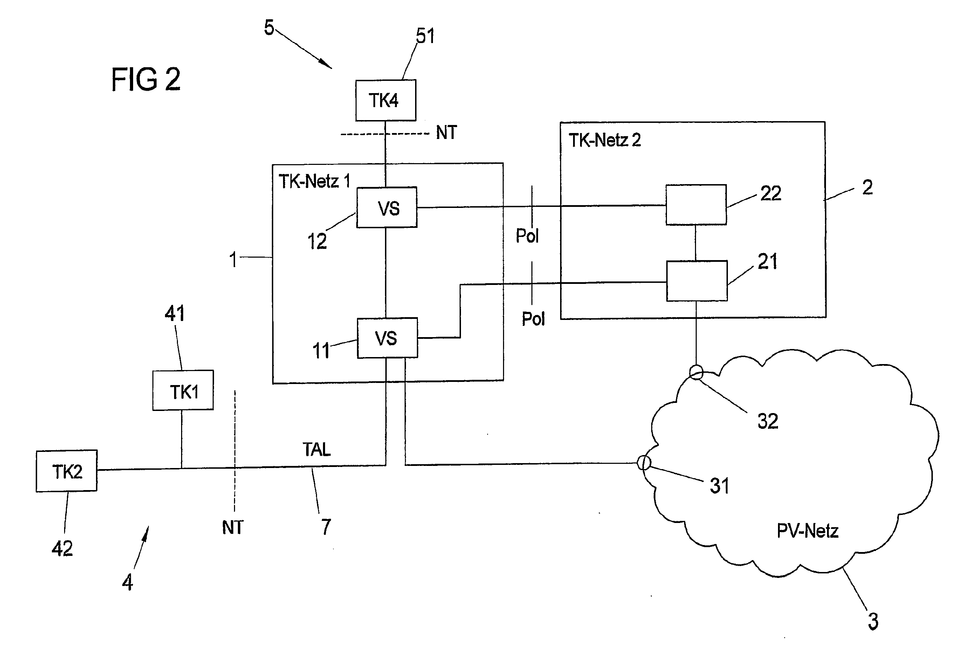

Zur Vermeidung dieser Nachteile ist gemäß dem erfindungsgemäßen Verfahren vorgesehen, dass der Teilnehmeranschluss 4 ein bestimmtes TK-Netz preselektiert hat betreffend an ihn gerichteter Verbindungsaufbauwünsche: Per (in der Regel statischer) Preselektion müssen an den Teilnehmeranschluss gerichtete Verbindungsaufbauwünsche stets über ein bestimmtes, von dem Teilnehmeranachluss (bzw. dessen Nutzer) preselektiertes TK-Netz zu diesem geleitet werden. Im Ausführungsbeispiel der Figur 2 ist dieses preselektierte Telekommunikationsnetz das TK-Netz 2, das mit dem TK-Netz 1 zusammengeschaltet ist.

Ein auf eines der Endsysteme 41, 42, 46 abziehlender Verbindungaufbauwunsch wird somit von dem TK-Netz 1 an das TK-Netz 2 geroutet. Das TK-Netz 1 prüft also vor jedem terminierenden Verbindungsaufbau zu einem Endsystem, ob für die Rufnummer des Teilnehmeranachlusses 4 eine "Reverse Preselektion" eingestellt ist. Für diesen Fall wird der Ruf an das preselektierte TK-Netz 2 geleitet.

Sofern der Verbindungsaufbauwunsch an einem direkt mit dem zweiten TK-Netz 2 oder einem weiteren TK-Netz verbundenen Endgerät generiert wird, ist es dann natürlich nicht erforderlich, dass der Verbindungsaufbauwunsch zunächst an das erste TK-Netz geleitet wird, da der Verbindungsaufbauwunsch in diesem Fall auch ohne eine Involvierung des ersten TK-Netzes an das preselektierte zweite TK-Netz geführt werden kann.

Innerhalb des TK-Netzes 2 wird der Verbindungswunsch beispielsweise von dem Switch 22 zum Switch 21 geroutet, wobei das Switch 21 dafür Sorge zu tragen hat, die Verbindung zum Teilnehmeranschluss 4 zu komplettieren, so dass eine Telekommunikation zwischen den beiden Netzanschlüssen 4, 5 bzw. damit verbundenen Endsystemen 51, 41, 42, 46 erfolgen kann.

Zur Komplettierung der Verbindung hat der komplettierende Switch 21 des TK-Netzes 2 mehrere Möglichkeiten.

In einer ersten, nicht die Erfindung betreffenden Variante erfolgt keine Komplettierung über das TK-Netz 1, da es bereits eine Verbindung zu diesem Teilnehmer gibt. Der Verbindungswunsch wird von dem komplettierenden Switch 21 zwar an die lokale Ortsvermittlungsstelle 11 des TK-Netzes 1 des Teilnehmeranschlusses 4 zurückgeleitet, aber von dieser nicht komplettiert. Die vorgenommene Reverse Preselektion weist hier den Vorteil auf, dass durch das Zusammenführen sämtlicher an den Teilnehmeranschluss 4 gerichteter Verbindungen an einen bestimmten Switch (dem Switch 21 des TK-Netzes 2) es möglich ist, dem gerufenen Teilnehmeranschluss 4 zusätzliche Dienste zur Verfügung zu stellen, falls auf seiner TAL weitere TK-Vorgänge auch im Belegungsfall realisiert werden sollen: Der komplettierende Switch 21 kennt ja den Status des betrachteten Teilnehmeranschlusses und hat Zugriff auf ihn. Ein solcher zusätzlicher Dienst kann - beim Eintreten eines zweiten Verbindungswunsches zu diesem Teilnehmer 4 - beispielsweise in der Erzeugung einer Benachrichtigung an den Benutzer des Endgerätes 4 liegen, wenn zu diesem bereits eine Verbindung besteht, dieser also bereits in einem anderen TR-Vorgang involviert ist - ohne dass diese neuerliche Verbindung zu ihm durchgeschaltet wird.

In einer zweiten, nicht die Erfindung betreffenden Variante erfolgt eine Komplettierung über das TK-Netz 1. Der Verbindungsaufbauwunsch wird also von dem komplettierenden Switch 21 an die lokale Ortsvermittlungsstelle 11 des TK-Netzes 1 des Teilnehmeranschlusses 4 geleitet und von der Ortsvermittlungsstelle 11 komplettiert. Es handelt sich dabei um die erste Verbindung von der Ortsvermittlungsstelle 11 zu dem Endteilnehmer, so dass die Verbindung komplettiert werden kann. Auch wenn ein Komplettieren der Verbindung wiederum über das TK-Netz 1 erfolgt, so weist die vorgenommene Reverse Preselektion doch auch hier den Vorteil auf, dass durch das Zusammenführen sämtlicher an den Teilnehmeranschluss 4 gerichteter Verbindungen an einen bestimmten Switch (dem Switch 21 des TK-Netzes 2) es möglich ist, auch dem gerufenen Teilnehmeranschluss 4 zusätzliche Dienste zur Verfügung zu stellen. Ein zusätzlicher Dienst kann beispielsweise die Signalisierung eines weiteren Verbindungsaufbauwunsches oder das Multiplexen mehrerer Verbindungen auf der Teilnehmeranschlussleitung sein, wie es in der DE 199 43 742 A1 beschrieben ist.

In einer dritten, erfindungsgemäßen Variante erfolgt das Komplettieren der Verbindung über das PV-Netz 3. Hierzu wird der Verbindungsaufbauwunsch vom präselektierten TK-Netz 2 an den Zugangspunkt 32 des PV-Netzes 3 geleitet. Sofern die zum Verbindungsaufbauwunsch zugehörigen Signalisierungsdaten (sowie nach Herstellen der Verbindung zum Teilnehmeranschluss 4 die dann zu übertragenden Nutzdaten) bisher nicht paketiert sind, werden diese als IP-Datenpakete paketiert oder entsprechend bestehender Protokolle wie H.323 oder SIP auf Signalisierungspakete des Paketvermittlungsnetzes abgebildet.

Anschließend erfolgt eine Datenübertragung innerhalb des PV-Netzes 3. Die Daten gelangen über übliches PV-Netz-Routing an den xDSL-Anschlussknoten 31 und werden von diesem aus über das Konzentratornetz 63, den DSLAM 62, den Splitter 61 und die TAL 7 in an sich bekannter Weise zum Teilnehmeranschluss 4 übertragen. Wiederum wird dabei darauf hingewiesen, dass ein Konzentratornetz 63 nicht zwingend erforderlich ist.

Am Teilnehmeranschluss 4 bestehen nun mehrere Möglichkeiten der Reaktion auf den eingehenden Telekommunikationswunsch.

In einer ersten Ausgestaltung werden die Daten von dem xDSL-Modem 43 an das in diesem Fall als PC mit Soundkarte ausgebildete TK-Endsystem 42 geleitet. Auf diese Weise kann ein Telefongespräch über PC-Telefonie realisiert werden.

In einer zweiten Ausgestaltung erfolgt eine Telefonverbindung mit dem TK-Endsystem 46, das in diesem Fall als analoges oder ISDN-Telefon ausgebildet ist. Dieses ist über den VoITA 45 mit dem xDSL-Modem 43 verbunden. Der VOITA wandelt die per xDSL-Technik übertragenen IP-Daten in Sprachdaten um und erledigt Signalisierungsaufgaben (z.B. Ruftonerzeugung), so dass eine übliche Sprachkonversation zwischen den Telefonen 51, 46 stattfinden kann. Derartige VOITAs sind im Handel erhältlich.

Die Terminierung der Verbindung über das Paketvermittlungsnetz 3 und den hochfrequenten Anteil des xDSL-Anschlusses 4 weist den Vorteil äußerst geringer Kosten für die Verbindung zum Teilnehmeranschluss 4 auf. Des weiteren können über den xDSL-Anschluss bei weiteren Verbindungsaufbauwünschen zusätzliche Dienste am Teilnehmeranschluss 4 bereitgestellt werden, beispielsweise können Daten verschiedener Telekommunikationsvorgänge und/oder zugehöriger Signalisierungen gemultiplext werden.

Die Figur 2 zeigt eine alternative Telekommunikationsanordnung, die sich von der Telekommunikationsanordnung der Figur 1 dadurch unterscheidet, dass der Teilnehmeranschluss 4 kein xDSL-Teilnehmeranschluss, sondern ein POTS/ISDN-Anschluss ist. Die Teilnehmeranschlussleistung 7 ist dabei mit der Ortsvermittlungsstelle 11 des TK-Netzes 1 verbunden. An dem Teilnehmeranschluss 4 befinden sich beispielsweise zwei TK-Endsysteme 41, 42, zum Beispiel ein analoges Telefon 41 und ein PC 42.

Es ist des Weiteren der Zugangspunkt 31 zum Paketvermittlungsnetz, der in der Ausgestaltung der Figur 1 als xDSL-Zugangspunkt ausgebildet ist, nunmehr - ebenso wie der Zugangspunkt 32 - als POTS/ISDN-Zugangspunkt ausgebildet. Der Zugangspunkt 31 ist beispielsweise direkt mit dem ersten TK-Netz 1 verbunden. Es kann jedoch ebenso vorgesehen sein, dass die Verbindung des Zugangspunktes 31 zunächst mit dem zweiten TK-Netz 2 oder einem weiteren, nicht dargestellten TK-Netz erfolgt und dieses weitere TK-Netz dann über einen Interconnectpunkt mit dem ersten TK-Netz 1 verbunden ist. Es muss lediglich sichergestellt werden, dass die Verbindungsaufbauinformationen von dem Zugangspunkt 31 über mindestens ein leitungsvermitteltes POTS/ISDN-Telekommunikationsnetz zum TK-Netz 1 und in diesem an die Vermittlungsstelle 11 geleitet werden.

Es wird nun wiederum der Fall betrachtet, dass von dem analogen oder digitalen Telefon 51 des Anschlusses 5 eine Telefonverbindung zu einem Endsystem 41, 42 des Teilnehmeranschlusses 4 aufgebaut und komplettiert werden soll.

Wie anhand der Figur 1 beschrieben, ist für den Teilnehmeranschluss 4 das TK-Netz 2 betreffend an ihn gerichteter Verbindungsaufbauwünsche preselektiert. Innerhalb des TK-Netzes 2 wird der Verbindungswunsch wiederum an den Switch 21 geroutet, der dafür Sorge zu tragen hat, die TK-Verbindung zum Teilnehmeranschluss 4 zu komplettieren.

Zur Komplettierung der TK-Verbindung erfolgt ein Routen des Verbindungsaufbauwunsches über das Paketvermittlungsnetz 3. Hierzu wird der Verbindungsaufbauwunsch an den Zugangspunkt 32 des Paketvermittlungsnetzes 3 geleitet und werden dort, sofern die entsprechenden Signalisierungsdaten bisher nicht paketiert sind, als IP-Datenpakete paketiert oder entsprechend bestehender Protokolle wie H.323 oder SIP auf Signalisierungspakete des Paketvermittlungsnetzes abgebildet. Anschließend erfolgt eine Datenübertragung im Paketvermittlungsnetz 3 bis zum weiteren Zugangspunkt 31. Sowohl der Zugriffspunkt 32 als auch der Zugriffspunkt 31 sind POTS/ISDN-Zugangspunkte, die einen Netzübergang zu einem POTS/ISDN-TK-Netz bereitstellen.

Eine Komplettierung der Verbindung erfolgt nun über das TK-Netz 1, d.h. der Verbindungsaufbauwunsch wird vom PV-Netz 3 an das erste TK-Netz 1 zurückgeleitet und dort von der dem Anschluss 4 zugeordneten Ortsvermittlungsstelle 11 komplettiert. Der Vorteil gegenüber einer - ebenfalls möglichen - Zurückleitung des Verbindungsaufbauwunsches vom preselektierten TK-Netz 2 sogleich in das erste TK-Netz 1 besteht darin, dass die Daten teilweise in kostengünstiger Weise über das Paketvermittlungsnetz 3 übertragen werden können. Dabei ist zu beachten, dass der terminierende Switch 21 des zweiten TK-Netzes 2 keineswegs in geographischer Nähe zum Teilnehmeranschluss 4 liegen muss. Bevorzugt handelt es sich bei dem terminierenden Switch 21 vielmehr um einen Switch, der möglichst nahe am Interconnectpunkt zum ersten TK-Netz angeordnet ist, so dass die Daten möglichst kurz innerhalb des TK-Netzes 2 geroutet und möglichst schnell an das PV-Netz 3 weitergegeben werden, so dass eine Optimierung der entstehenden Kosten erfolgen kann. Insbesondere kann auf diese Weise eine kostengünstige Internet-Telephonie im Falle von Sprachverbindungen realisiert werden.

Die erfindungsgemäße Lösung sowohl in der Ausgestaltung der Figur 1 als auch in der Ausgestaltung der Figur 2 ermöglicht also eine "Reverse Preselektion" in Verbindung mit einer kostengünstigen Verbindungskomplettierung und Datenübertragung über ein Paketvermittlungsnetz, die dadurch hergestellt und gewährleistet wird, dass eine "Reverse Preselektion" vorliegt und im preselektierten TK-Netz (etwa durch ein Netzmanagement) Voreinstellungen dahingehend vorgenommen sind, dass der zu terminierende TK-Verbindungsaufbauwunsch über ein Paketvermittlungsnetz geleitet wird. Es handelt sich insofern bei dem erfindungsgemäßen Verfahren um eine "Reverse IP-Telephonie-Preselektion".

Darüber hinaus ermöglicht die erfindungsgemäße Lösung auch, am rufenden Teilnehmeranschluss zusätzliche Dienste bereitzustellen. So hat der komplettierende Switch des preselektierten TK-Netzes Zugriff auf sämtliche Verbindungen eines betrachteten Teilnehmeranschlusses. Beispielsweise bestehen erweiterte Möglichkeiten, an den Telekommunikationsanschluss Informationen über zusätzlich eingehende Verbindungswünsche zu übersenden und diese dort darzustellen. Auch besteht beispielsweise die Möglichkeit eines Multiplexens der Daten verschiedener TK-Verbindungen auf einer Teilnehmeranschlussleitung. Derartige zusätzliche Dienste und Funktionalitäten sind in der DE 199 43 742 A1 beschrieben, auf die insofern ausdrücklich Bezug genommen wird.

## Patentansprüche

1. Verfahren zum Herstellen einer Telekommunikations (TK)-Verbindung an einem gerufenen Teilnehmeranschluss (4) eines ersten Telekommunikations (TK)-Netzes (1), an den mindestens ein Endsystem (41, 42, 46) angeschlossen ist, wobei der gerufene Teilnehmeranschluss (4) eine durch den Betreiber des ersten TK-Netzes (1) zugeordnete Rufnummer besitzt, und wobei das erste TK-Netz (1) und ein zweites TK-Netz (2) über Interconnectpunkte (POIs) zusammengeschaltet sind, die einen Netzübergang zwischen dem ersten TK-Netz (1) und dem zweiten TK-Netz (2) verwirklichen,
umfassend die Schritte:
- Preselektieren des zweiten TK-Netzes (2) als TK-Netz (2), über das an den Teilnehmeranschluss (4) unter Verwendung der Rufnummer des Teilnehmeranschlusses (4) gerichtete TK-Verbindungen komplettiert werden,
- Routen sämtlicher TK-Verbindungsaufbauwünsche, die unter Verwendung der Rufnummer des Teilnehmeranschlusses (4) an den Teilnehmeranschluss (4) gerichtet sind, in das preselektierte TK-Netz (2), und
- Komplettieren einer gewünschten TK-Verbindung zu dem Teilnehmeranschluss (4) über das preselektierte TK-Netz (2), wobei
- das Komplettieren der gewünschten TK-Verbindung über das preselektierte TK-Netz (2) umfasst:
o Routen des an die Rufnummer des Teilnehmeranschlusses (4) gerichteten TK-Verbindungsaufbauwunsches von dem preselektierten TK-Netz (2) an einen ersten Zugangspunkt (32) eines Paketvermittlungsnetzes (3),
o Routen des TK-Verbindungsaufbauwunsches vom ersten Zugangspunkt (32) über das Paketvermittlungsnetz (3) an einen zweiten Zugangspunkt (31) des Paketvermittlungsnetzes (3) und von diesem an den gerufenen Teilnehmeranschluss (4).

2. Verfahren nach Anspruch 1, **dadurch gekennzeichnet, dass** der Teilnehmeranschluss einen xDSL-Teilnehmeranschluss umfasst und das Komplettieren der gewünschten TK-Verbindung über das preselektierte TK-Netz zu dem xDSL-Teilnehmeranschluss umfasst:
- Routen des TK-Verbindungsaufbauwunsches im Paketvermittlungsnetz an einen xDSL-Zugangspunkt zum Paketvermittlungsnetz und von diesem über xDSL-Technik an den xDSL-Anschluss.

3. Verfahren nach Anspruch 1, **dadurch gekennzeichnet, dass** der TK-Verbindungsaufbauwunsch vom zweiten Zugangspunkt des Paketvermittlungsnetzes an das erste TK-Netz geleitet und über eine Ortsvermittlungsstelle des ersten TK-Netzes terminiert wird.

4. Verfahren nach einem der vorangehenden Ansprüche, **dadurch gekennzeichnet, dass** an den gerufenen Teilnehmeranschluss zu übertragende Daten an dem ersten Zugangspunkt des Paketvermittlungsnetzes paketiert werden, sofern sie noch nicht als paketierte Daten vorliegen.

5. Verfahren nach Anspruch 4, **dadurch gekennzeichnet, dass** die Daten als IP-Datenpakete paketiert und über das Paketvermittlungsnetz übertragen werden.

6. Verfahren nach einem der vorangehenden Ansprüche, **dadurch gekennzeichnet, dass** der an den gerufenen Teilnehmeranschluss gerichtete TK-Verbindungsaufbauwunsch eine Sprachverbindung betrifft und an den gerufenen Teilnehmeranschluss zu übertragenen Daten per Internet-Telefonie über das Paketvermittlungsnetz übertragen werden.

7. Verfahren nach einem der vorangehenden Ansprüche, **dadurch gekennzeichnet, dass** am Teilnehmeranschluss empfangene Daten an diesem einem Computer zugeführt und dort akustisch und/oder optisch dargestellt werden.

8. Verfahren nach den Ansprüchen 2 und 6, **dadurch gekennzeichnet, dass** über den xDSL-Anschluss empfangene Daten vor oder nach ihrem Empfang am xDSL-Anschluss eine VOIP-Vorrichtung durchlaufen, die die paketierten Daten in ein Signal umwandelt, das durch einen am xDSL-Anschluss angeschlossenen analogen oder digitalen Telefonapparat wiedergebbar ist.

9. Verfahren nach einem der vorangehenden Ansprüche, **dadurch gekennzeichnet, dass** ein Preselektieren des zweiten TK-Netzes **dadurch** erfolgt, dass die Zuordnung des Teilnehmeranschlusses zu dem preselektierten TK-Netz in eine Datenbank eingetragen wird und das erste TK-Netz anhand der Datenbank überprüft, ob ein eingehender TK-Verbindungsaufbauwunsch an das zweite TK-Netz geroutet werden soll oder nicht.

10. Verfahren nach einem der vorangehenden Ansprüche, **dadurch gekennzeichnet, dass** über das preselektierte TK-Netz bereits eine TK-Verbindung zu dem gerufenen Teilnehmeranschluss besteht und ein zusätzlich eingehender TK-Verbindungsaufbauwunsch über das preselektierte TK-Netz und das Paketvermittlungsnetz an den gerufenen Teilnehmeranschluss geroutet wird.

11. Verfahren nach den Ansprüchen 2 und 10, **dadurch gekennzeichnet, dass** die bereits bestehende TK-Verbindung über das Paketvermittlungsnetz und xDSL-Technik termiert wurde und die Daten der zusätzlichen TK-Verbindung mit den Daten der bereits bestehenden Verbindung auf der xDSL-Übertragungsstrecke gemultiplext werden.

12. Verfahren nach einem der vorangehenden Ansprüche, **dadurch gekennzeichnet, dass** erst dann ein eingehender TK-Verbindungsaufbauwunsch über das preselektierte TK-Netz und das Paketvermittlungsnetz an den gerufenen Teilnehmeranschluss geroutet wird, nachdem mindestens eine bereits bestehende TK-Verbindung zu dem betrachteten Teilnehmeranschluss über das erste TK-Netz terminiert wurde.

13. Verfahren nach einem der vorangehenden Ansprüche, **dadurch gekennzeichnet, dass** für den Fall, dass eine Routen eines TK-Verbindungsaufbauwunsches vom ersten TK-Netz an das zweite TK-Netz aus technischen Gründen ausnahmsweise nicht möglich ist, der TK-Verbindungsaufbauwunsches über das erste TK-Netz terminiert wird.

## Claims

1. A method for establishing a telecommunication (TC) connection on a called subscriber terminal (4) of a first telecommunication (TC) network (1), to which at least one end system (41, 42, 46) is connected, wherein the called subscriber terminal (4) has a call number assigned by the operator of the first TC network (1), and wherein the first TC network (1) and a second TC network (2) are interconnected via interconnection points (POIs) which realize a gateway between the first TC network (1) and the second TC network (2),
comprising the following steps:
- preselecting the second TC network (2) as a TC network (2) via which TC connections directed to the subscriber terminal (4) by using the call number of the subscriber terminal (4) are completed,
- routing all TC call set-up requests which are directed to the subscriber terminal (4) by using the call number of the subscriber terminal (4) into the preselected TC network (2), and
- completing a desired TC connection to the subscriber terminal (4) via the preselected TC network (2), wherein
- completing the desired TC connection via the preselected TC network (2) comprises:
o routing the TC call set-up request directed to the call number of the subscriber terminal (4) from the preselected TC network (2) to a first access point (32) of a packet switching network (3),
o routing the TC call set-up request from the first access point (32) via the packet switching network (3) to a second access point (31) of the packet switching network (3) and from the same to the called subscriber terminal (4).

2. The method according to claim 1, **characterized in that** the subscriber terminal comprises an xDSL subscriber terminal and completing the desired TC connection via the preselected TC network to the xDSL subscriber terminal comprises:
- routing the TC call set-up request in the packet switching network to an xDSL access point to the packet switching network and from the same to the xDSL terminal by xDSL technology.

3. The method according to claim 1, **characterized in that** the TC call set-up request is passed from the second access point of the packet switching network to the first TC network and is terminated via a local switching center of the first TC network.

4. The method according to any of the preceding claims, **characterized in that** data to be transmitted to the called subscriber terminal are packetized at the first access point of the packet switching network, if they are not yet present as packetized data.

5. The method according to claim 4, **characterized in that** the data are packetized as IP data packets and transmitted via the packet switching network.

6. The method according to any of the preceding claims, **characterized in that** the TC call set-up request directed to the called subscriber terminal relates to a voice connection and data to be transmitted to the called subscriber terminal are transmitted by internet telephony via the packet switching network.

7. The method according to any of the preceding claims, **characterized in that** data received at the subscriber terminal are supplied to a computer and represented there acoustically and/or optically.

8. The method according to claims 2 and 6, **characterized in that** data received via the xDSL connection pass through a VoIP device before or after receipt thereof at the xDSL connection, which VoIP device converts the packetized data into a signal which can be reproduced by an analog or digital telephone set connected to the xDSL connection.

9. The method according to any of the preceding claims, **characterized in that** preselecting the second TC network is effected **in that** the assignment of the subscriber terminal to the preselected TC network is entered into a database and with reference to the database the first TC network checks whether or not an incoming TC call set-up request should be routed to the second TC network.

10. The method according to any of the preceding claims, **characterized in that** a TC connection to the called subscriber terminal already exists via the preselected TC network and an additionally incoming TC call set-up request is routed to the called subscriber terminal via the preselected TC network and the packet switching network.

11. The method according to claims 2 and 10, **characterized in that** the already existing TC connection has been terminated via the packet switching network and by xDSL technology and the data of the additional TC connection are multiplexed with the data of the already existing connection on the xDSL transmission link.

12. The method according to any of the preceding claims, **characterized in that** an incoming TC call set-up request will only be routed to the called subscriber terminal via the preselected TC network and the packet switching network after at least one already existing TC connection to the subscriber terminal in question has been terminated via the first TC network.

13. The method according to any of the preceding claims, **characterized in that** for the case that routing a TC call set-up request from the first TC network to the second TC network exceptionally is not possible for technical reasons, the TC call set-up request is terminated via the first TC network.

## Revendications

1. Procédé pour établir une liaison de télécommunication (TK) au niveau d'un poste d'abonné appelé (4) d'un premier réseau de télécommunication (TK), auquel est connecté au moins un système terminal (41, 42, 46), dans lequel le poste d'abonné appelé (4) possède un numéro d'appel attribué par l'opérateur du premier réseau TK (1), et dans lequel le premier réseau TK (1) et un deuxième réseau TK (2) sont interconnectés par des points d'interconnexion (POI) réalisant une passerelle de réseau entre le premier réseau TK (1) et le deuxième réseau TK (2),
comprenant les étapes consistant à :
- présélectionner le deuxième réseau TK (2) en tant que réseau TK (2) par lequel des liaisons TK destinées au poste d'abonné (4) utilisant le numéro d'appel du poste d'abonné (4) sont réalisées,
- acheminer toutes les demandes d'établissement de liaison TK, qui sont destinées au poste d'abonné (4) en utilisant le numéro d'appel du poste d'abonné (4), vers le réseau TK présélectionné (2), et
- réaliser une liaison TK souhaitée avec le poste d'abonné (4) à travers le réseau TK présélectionné (2), dans lequel
- la réalisation de la liaison TK souhaitée à travers le réseau TK présélectionné (2) comprend les étapes consistant à :
-- acheminer la demande d'établissement de liaison TK destinée au numéro d'appel du poste d'abonné (4) du réseau TK présélectionné (2) vers un premier point d'accès (32) d'un réseau à commutation de paquets (3),
-- acheminer la demande d'établissement de liaison TK du premier point d'accès (32) à travers le réseau à commutation de paquets (3) vers un deuxième point d'accès (31) du réseau à commutation de paquets (3) et à partir de celui-ci vers le poste d'abonné appelé (4).

2. Procédé selon la revendication 1, **caractérisé en ce que** le poste d'abonné comprend un poste d'abonné xDSL et la réalisation de la liaison TK souhaitée à travers le réseau TK présélectionné avec un poste d'abonné xDSL comprend l'étape consistant à:
- acheminer la demande d'établissement de liaison TK dans le réseau à commutation de paquets vers un point d'accès xDSL au réseau à commutation de paquets et à partir de celui-ci, par le biais d'une technique xDSL, vers le poste xDSL.

3. Procédé selon la revendication 1, **caractérisé en ce que** la demande d'établissement de liaison TK est dirigée du deuxième point d'accès du réseau à commutation de paquets au premier réseau TK et terminée par l'intermédiaire d'un central local du premier réseau TK.

4. Procédé selon l'une quelconque des revendications précédentes, **caractérisé en ce que** des données à transmettre au poste d'abonné appelé sont mises en paquet au premier point d'accès du réseau à commutation de paquets dans la mesure où elles n'existent pas déjà sous forme de données mises en paquets.

5. Procédé selon la revendication 4, **caractérisé en ce que** les données sont mises en paquets sous forme de paquets de données IP et transmises à travers le réseau à commutation de paquets.

6. Procédé selon l'une quelconque des revendications précédentes, **caractérisé en ce que** la demande d'établissement de liaison TK destinée au poste d'abonné appelé concerne une communication vocale, et **en ce que** des données à transmettre au poste d'abonné appelé sont transmises par téléphonie internet à travers le réseau à commutation de paquets.

7. Procédé selon l'une quelconque des revendications précédentes, **caractérisé en ce que** des données reçues au poste d'abonné y sont amenées à un ordinateur et y sont représentés de façon acoustique et/ou visuelle.

8. Procédé selon les revendications 2 et 6, **caractérisé en ce que** des données reçues par l'intermédiaire du poste xDSL passent, avant ou après leur réception au poste xDSL, par un dispositif VOIP qui convertit les données mises en paquets en un signal qui peut être reproduit par un téléphone analogique ou numérique connecté au poste xDSL.

9. Procédé selon l'une quelconque des revendications précédentes, **caractérisé en ce qu'**une présélection du deuxième réseau TK est effectuée **en ce que** l'attribution du poste d'abonné au réseau TK présélectionné est inscrite dans une base de données, et **en ce que** le premier réseau TK vérifie au moyen de la base de données si une demande d'établissement de liaison TK entrante est à acheminer vers le deuxième réseau TK ou non.

10. Procédé selon l'une quelconque des revendications précédentes, **caractérisé en ce qu'**à travers le réseau TK présélectionné, il existe déjà une liaison TK avec le poste s'abonné appelé, et **en ce qu'**une demande d'établissement de liaison TK entrant en plus est acheminée à travers le réseau TK présélectionné et le réseau à commutation de paquets vers le poste d'abonné appelé.

11. Procédé selon les revendications 2 et 10, **caractérisé en ce que** la liaison TK déjà existante a été terminée à travers le réseau à commutation de paquets et une technique xDSL, et **en ce que** les données de la liaison TK supplémentaire sont multiplexées avec les données de la liaison déjà existante sur la voie de transmission xDSL.

12. Procédé selon l'une quelconque des revendications précédentes, **caractérisé en ce qu'**une demande d'établissement de liaison TK entrante est acheminée à travers le réseau TK présélectionné et le réseau à commutation de paquets vers le poste d'abonné appelé seulement après qu'au moins une liaison TK déjà existante avec le poste d'abonné en question a été terminée à travers le premier réseau TK.

13. Procédé selon l'une quelconque des revendications précédentes, **caractérisé en ce que** dans le cas où un acheminement d'une demande d'établissement de liaison TK du premier réseau TK au deuxième réseau TK ne serait pas possible exceptionnellement pour des raisons techniques, la demande d'établissement de liaison TK est terminée à travers le premier réseau TK.
